# EUROPÄISCHE PATENTSCHRIFT

(11) **EP 2 171 240 B1**
(45) Veröffentlichungstag und Bekanntmachung des Hinweises auf die Patenterteilung: **27.07.2016**
(21) Anmeldenummer: 08785194.5
(22) Anmeldetag: 29.07.2008
(51) Int. Cl.: F02C 9/28

(54) **VERFAHREN ZUR BESTIMMUNG VON EMISSIONSWERTEN EINER GASTURBINE UND VORRICHTUNG ZUR DURCHFÜHRUNG DES VERFAHRENS**
METHOD FOR DETERMINING EMISSION VALUES OF A GAS TURBINE, AND APPARATUS FOR CARRYING OUT SAID METHOD
PROCÉDÉ DE DÉTERMINATION DE VALEURS D'ÉMISSION D'UNE TURBINE À GAZ ET DISPOSITIF SERVANT À LA MISE EN OEUVRE D'UN TEL PROCÉDÉ

(30) Priorität: 01.08.2007 DE 102007036084
(43) Veröffentlichungstag der Anmeldung: 07.04.2010
(73) Patentinhaber: MAN Diesel & Turbo SE, 86153 Augsburg (DE)
(72) Erfinder: KRÜGER, Dietmar, 46535 Dinslaken (DE); SCHIMANSKI, Thomas, 44625 Herne (DE); KOCH, Dirk, 42115 Wuppertal (DE)
(86) Internationale Anmeldenummer: PCT/EP2008/006247
(87) Internationale Veröffentlichungsnummer: WO 2009/015868

(56) Entgegenhaltungen:
- EP-A- 1 367 248
- US-A- 5 703 777
- US-A1- 2003 191 575

## Beschreibung

Die vorliegende Erfindung betrifft ein Verfahren zur Bestimmung von Emissionswerten einer Gasturbine sowie eine Vorrichtung zur Durchführung eines solchen Verfahrens.

Die Bestimmung von Emissionswerten bei Gasturbinen im Betrieb gewinnt im Hinblick auf eine immer wichtiger werdende Kontrolle der Emissionen durch die Betreiber, Abnahmebehörden und dergleichen zunehmend an Bedeutung. Zum einen sollen Gasturbinen möglichst emissionsarm betrieben werden, was eine kontinuierliche oder diskrete, beispielsweise periodische oder stichprobenartige, Bestimmung der Emissionswerte der Gasturbine erfordert. Zum anderen können anhand dieser Emissionswerte frühzeitig ungünstige Betriebsbedingungen der Gasturbine erkannt werden.

Nach betriebsinterner Praxis ist es hierzu bisher bekannt, die Emissionswerte durch zusätzliche eigene Messgeräte zu bestimmen. Dies erhöht jedoch den Herstellungs- und Wartungsaufwand für die Gasturbinen. Zudem beeinträchtigt der Zwang, Messgeräte an geeigneten Stellen anzuordnen, die Gestaltungsfreiheit bei der Auslegung der Gasturbine bzw. der damit verbundenen Maschinen. Da die Messgeräte vorzugsweise im heißen Abgasstrom der Gasturbine angeordnet werden, sind sie darüber hinaus einer hohen Belastung durch die Umgebungsbedingungen ausgesetzt, was gleichermaßen teure Ausführungen und einen häufigeren Ersatz der Messgeräte bedingt.

Alternativ ist es daher bereits bekannt, die Emissionswerte anhand eines mathematischen Ersatzmodelles der Gasturbine anhand von Betriebsparametern, wie beispielsweise der Drehzahl oder dergleichen, zu berechnen. Diese Berechnung anhand eines Ersatzmodelles ist jedoch aufgrund der notwendigen Vereinfachungen bei der Modellierung, der Unsicherheiten in den Modellparametern und dergleichen, zwangsläufig ungenau und erfordert zudem einen relativ hohen Aufwand bei der Modellierung neuer Gasturbinentypen und der Kalibrierung der Modellparameter.

Aufgabe der vorliegenden Erfindung ist es daher, eine Möglichkeit zu schaffen, Emissionswerte einer Gasturbine auf einfache und präzise Weise zu bestimmen.

Diese Aufgabe wird durch ein Verfahren nach Anspruch 1 gelöst. Anspruch 10 stellt eine entsprechende Vorrichtung zur Durchführung eines solchen Verfahrens unter Schutz. US 570 3777 und DE 103 1606 offenbaren Systeme zur Bestimmung von Emissionen für Verbrennungsmotoren nach dem Oberbegriff vom Anspruch 1. Vor einer (Wieder) Inbetriebnahme einer Gasturbine wird zur Überprüfung der Funktionalitäten, der Bauteile und dergleichen regelmäßig beim Hersteller oder vor Ort ein Probelauf der Gasturbine durchgeführt. Erfindungsgemäß werden nun während eines solchen Probelaufs, der vor einer Inbetriebnahme der Gasturbine ohnehin durchgeführt wird, Betriebsparameter der Gasturbine sowie erste Emissionswerte bestimmt. Die Bestimmung kann dabei direkt, beispielsweise durch Messung einzelner Betriebsparameter oder erster Emissionswerte, oder gleichermaßen indirekt, beispielsweise durch Messung von Betriebsparametern und Umrechnung dieser Parameter in andere Betriebsparameter, erfolgen.

Zwischen den während des Probelaufs bestimmten Betriebsparametern und ersten Emissionswerten bestehen thermodynamische Zusammenhänge. So nimmt beispielsweise die Menge an Stickoxiden NOx bei bestimmten Temperaturen oder Verbrennungsgraden in der Gasturbine zu bzw. ab. Erfindungsgemäß wird daher eine Zuordnung zwischen den während des Probelaufs bestimmten Betriebsparametern und ersten Emissionswerten abgespeichert. Dies kann beispielsweise in Form eines Kennfeldes erfolgen, in dem einem oder mehreren Betriebsparametern jeweils ein erster Emissionswert zugeordnet ist. Für Betriebsparameterwerte zwischen den in den Kennfeldern abgelegten Größen können die ersten Emissionswerte beispielsweise linear interpoliert werden. Gleichermaßen ist es auch möglich, die Zuordnung zwischen Betriebsparametern und ersten Emissionswerten durch eine Näherungsfunktion, beispielsweise eine Polynomfunktion, eine Exponentialfunktion, eine trigonometrische Reihe, abschnittsweise definierte kubische Splines oder dergleichen anzunähern und nur diese Funktion, d.h. beispielsweise die Koeffizienten eines Polynoms, abzuspeichern.

Während des Betriebes werden wiederum Betriebsparameter der Gasturbine bestimmt. Diese können teilweise oder vollständig mit den während des Probelaufs bestimmten Betriebsparametern übereinstimmen. Gleichermaßen ist es, wie nachfolgend noch ausgeführt wird, auch möglich, zusätzliche oder andere Betriebsparameter zu nutzen. Bevorzugt werden während des Betriebs und/oder des Probelaufs zur Bestimmung von Emissionswerten solche Betriebsparameter bestimmt, die zur Überwachung, Steuerung oder Regelung der Gasturbine ohnehin bestimmt, d.h. direkt gemessen oder indirekt aus anderen Betriebsparametern berechnet werden. Damit verringert sich der Aufwand zur erfindungsgemäßen Bestimmung von Emissionswerten vorteilhafterweise noch weiter.

Anhand der während des Betriebes bestimmten Betriebsparameter und der. abgespeicherten Zuordnung zwischen Betriebsparametern und ersten Emissionswerten werden dann erfindungsgemäß zweite Emissionswerte der Gasturbine bestimmt, die das Emissionsverhalten der Gasturbine im aktuellen Betriebspunkt charakterisieren. Hierzu können beispielsweise die während des Betriebs bestimmten Betriebsparameter in eine Funktion eingesetzt werden, als die eine Zuordnung zwischen Betriebsparametern und ersten Emissionswerten abgespeichert ist. Ist die Zuordnung beispielsweise in Form eines Kennfeldes abgespeichert, können die den während des Betriebs bestimmten Betriebsparametern zugeordneten ersten Emissionswerte aus dem Kennfeld ausgelesen bzw. interpoliert werden.

Die ersten Emissionswerte, die sich entsprechend der Zuordnung für die während des Betriebs bestimmten Betriebsparameter ergeben, können mit den zweiten, das Emissionsverhalten der Gasturbine während des Betriebs charakterisierenden Emissionswerten identisch sein. Gleichermaßen können die ersten Emissionswerte, insbesondere entsprechend während des Betriebs bestimmter Betriebsparameter, in zweite Emissionswerte umgerechnet werden, wie nachfolgend näher erläutert wird.

Bei Gasturbinen wird häufig eine Gasturbinentemperatur, beispielsweise die Temperatur eines die Gasturbine durchströmenden Mediums, am Eintritt einer Niederdruck- oder Hochdruckstufe als Überwachungs- und Regelgröße für eine Begrenzungsregelung oder, um vorgegebene Laststufen der Gasturbine darzustellen, verwendet. Hierzu wird eine solche Gasturbinentemperatur erfasst und mit einem vorgegebenen bzw. änderbaren Sollwert verglichen. Aus der Regeldifferenz zwischen diesen beiden Werten werden dann Steuergrößen für einen Leitapparat, eine Brennstoffzufuhr, die Öffnung eines Bypassventils oder dergleichen nach einen vorgegebenen Regelgesetz bestimmt.

Nach betriebsinterner Praxis kann eine solche Gasturbinentemperatur entsprechend der Umgebungstemperatur korrigiert werden, indem sie mit der Umgebungstemperatur in funktionalen Zusammenhang T4*(T4, TO) gesetzt wird.

Da diese gemessene bzw. entsprechend der Umgebungstemperatur korrigierte Gasturbinentemperatur während des Betriebs ohnehin bestimmt wird und in der Regel proportional zu einer gerade gefahrenen Laststufe der Gasturbine ist, eignet sich dieser Betriebsparameter besonders für eine erfindungsgemäße Bestimmung von Emissionswerten.

In einer bevorzugten Ausführung der vorliegenden Erfindung umfassen die ersten Emissionswerte spezifische Emissionswerte, d.h. Werte, die auf einem bestimmten Abgasvolumen- oder -massenstrom skaliert sind. Dies ermöglicht die Zusammenfassung verschiedener Betriebszustände der Gasturbine in ein kleinerrangiges Kennfeld sowie den Einsatz einfacherer Messgeräte, die nur spezifische Größen messen. Es hat sich gezeigt, dass diese spezifischen Emissionswerte im Wesentlichen von einer korrigierten Gasturbinentemperatur abhängen, so dass hier eine besonders einfache Zuordnung zwischen diesem einen Betriebsparameter und den spezfischen ersten Emissionswerten vorliegt, die beim Probelauf einfach und präzise erfasst und mit geringem Aufwand abgespeichert werden kann.

Häufig interessieren jedoch nicht spezifische Emissionswerte, sondern absolute Werte, d.h. die absolute Masse bzw. das absolute Volumen an Abgasen. Daher wird in einer bevorzugten Ausführung der vorliegenden Erfindung ein anhand der Zuordnung zwischen Betriebsparametern und spezifischen ersten Emissionswerten ermittelter Emissionswert mit dem Abgasmassen- bzw. -volumenstrom multipliziert.

Hierzu kann der Abgasmassen- bzw. -volumenstrom direkt gemessen werden. Es ist jedoch auch vorteilhaft möglich den Abgasmassenstrom indirekt aus Betriebsparametern, beispielsweise der korrigierten Gasgeneratordrehzahl, dem Umgebungsdruck und der Umgebungstemperatur zu bestimmen. Hierzu kann beispielsweise für einen bestimmten Gasturbinentyp ein Kennfeld errechnet werden, in dem zu diskreten Paaren vor korrigierter Gasgeneratordrehzahl und Umgebungstemperatur jeweils der zugehörige Abgasmassenstrom abgespeichert ist.

In einer bevorzugten Ausführung wird als zweiter Emissionswert die Gesamtmenge an Stickoxiden NOx pro Zeiteinheit bestimmt.

Üblicherweise wird im Betrieb von Gasturbinen auch der Druck der zugeführten Luft bzw. des anfallenden Abgases gemessen. Unter Berücksichtigung des spezifischen Volumens bzw. der Dichte des Abgases bei einem bestimmten Druck kann daher auf einfache Weise aus dem Abgasmassenstrom durch Division durch die zu dem gemessenen Druck gehörenden Dichte auch der Abgasvolumenstrom bestimmt werden.

Häufig sehen Abnahmeprotokolle, Prüfvorschriften von Abnahmebehörden oder dergleichen die Angabe bestimmter normierter Emissionswerte für den Betrieb vor. Beispielsweise ist in Deutschland die Angabe der Emissionswerte für 15 % Sauerstoff im trockenen Abgas erforderlich.

Vorteilhafterweise werden während des Probelaufes erste Emissionswerte bezogen auf Normwerte, beispielsweise einen Sauerstoffgehalt von 15 % im trockenen Abgas bestimmt. Diese Bestimmung der ersten Emissionswerte gestattet eine einfache Bestimmung der Emissionscharakteristik der Gasturbine im Betrieb unter Berücksichtigung der von Prüfprotokollen oder dergleichen vorgeschriebenen Randbedingungen.

Die Emissionswerte einer Gasturbine ändern sich insbesondere entsprechend der aktuell anliegenden Laststufe. Vorteilhafterweise werden daher während des Probelaufes zur Bestimmung der ersten Emissionswerte verschiedene Laststufen der Gasturbine angefahren. Dies ist in der Regel bei einem Probelauf der Gasturbine zur Überprüfung der einwandfreien Funktionalität in allen Betriebsbereichen ohnehin erforderlich und stellt daher keinen zusätzlichen Aufwand dar. Je feiner die Diskretisierung der Laststufen dabei vorgenommen wird, desto präziser wird die abgespeicherte Zuordnung zwischen Betriebsparametern und ersten Emissionswerten, wobei als ein Betriebsparameter bevorzugt die Laststufe oder die dieser entsprechende korrigierte Gasturbinentemperatur verwendet wird.

Da bei der erfindungsgemäßen Bestimmung von Emissionswerten die tatsächlichen, während eines Probelaufs der Gasturbine bestimmten ersten Emissionswerte zugrundegelegt werden, können die Emissionswerte im Betrieb einfach, zuverlässig und präzise bestimmt werden, ohne dass dabei Vereinfachungen bei der Modellierung oder Parameterungenauigkeiten die Ergebnisse beeinträchtigen. Gleichwohl kann sich das Betriebsverhalten einer Gasturbine zwischen dem Probelauf, der üblicherweise noch beim Gasturbinenhersteller erfolgt, und dem Betrieb der in eine Anlage eingebauten Gasturbine verändern. Es hat sich gezeigt, dass dabei die Zuordnung zwischen Betriebsparametern und Emissionswerten qualitativ im Wesentlichen gleich bleibt und nur um einen konstanten Offset verschoben ist. In einer bevorzugten Ausführung der vorliegenden Erfindung wird daher die abgespeicherte Zuordnung zwischen den Betriebsparametern und den ersten Emissionswerten ein- oder mehrmals an einem oder mehreren Betriebspunkten der Gasturbine kalibriert. Hierzu wird in dem bzw. den Betriebspunkten ein tatsächlich vorliegender Emissionswert bestimmt und mit dem Emissionswert verglichen, der sich aus der abgespeicherten Zuordnung ergibt. Die Zuordnung, d.h. beispielsweise eine abgespeicherte Funktion oder die Werte eines abgespeicherten Kennfeldes, werden dann mit dem Quotienten aus dem gemessenen und dem sich aus der Zuordnung ergebenden Emissionswert multipliziert.

Eine erfindungsgemäße Vorrichtung zur Durchführung des vorstehend beschriebenen Verfahrens kann als gesonderte Vorrichtung für eine Gasturbine vorgesehen sein, der die ersten Emissionswerte und die Betriebsparameter zugeführt werden. Bevorzugt ist eine solche Vorrichtung jedoch in eine Regelung der Gasturbine integriert, in der die Betriebsparameter und die ersten Emissionswerte bevorzugt wenigstens teilweise ohnehin vorliegen. Die Zuordnung zwischen Betriebsparametern und erstem Emissionswerten kann während des Probelaufs separat aufgenommen, ausgewertet und anschließend in der Vorrichtung abgespeichert werden.

Die von der Vorrichtung bestimmten Emissionswerte während des Betriebs der Gasturbine werden vorteilhafterweise entsprechend der jeweiligen Abnahme-, Prüf- oder Überwachungsprotokolle angezeigt und/oder gespeichert. Dies kann beispielsweise kontinuierlich oder zu diskreten Zeitpunkten, beispielsweise periodisch oder stichprobenartig, erfolgen.

Weitere Aufgaben, Merkmale und Vorteile der vorliegenden Erfindung ergeben sich aus dem nachfolgend erläuterten Ausführungsbeispiel.

Gemäß eines Verfahrens nach einer Ausführung der vorliegenden Erfindung wird für eine bestimmte Gasturbine zunächst ein Abgasmassenstrom-Kennfeld errechnet. Der Abgasmassenstrom dm/dt in kg pro Stunde ergibt sich aus einem Modell der Gasturbine in Abhängigkeit von der jeweiligen Laststufe (beispielsweise 10 %, 20 %, ..., 100 %) und der Umgebungstemperatur T0.

Zur Abnahme der Gasturbine wird bei einer bestimmten Umgebungstemperatur T0 für verschiedene Laststufen jeweils ein spezifischer erster Emissionswert NOx bestimmt. Hierzu werden die verschiedenen Laststufen durch Vorgabe bestimmter Sollwerte für eine korrigierte Gasturbinentemperatur T4 angefahren, die mit den Laststufen im Wesentlichen linear zusammenhängt. Diese korrigierte Gasturbinentemperatur T4* ergibt sich aus der Temperatur am Niederdruckeintritt der Gasturbine T4, von der die halbe Umgebungstemperatur 0,5 T0 subtrahiert wird (T4 * = T4 - 0,5 TO), wobei auch andere Zusammenhänge (T4*(T4, T0) zugrundegelegt werden können.

Dieser spezifische erste Emissionswert NOx wird für den jeweiligen Betriebsparameter in Form der korrigierten Gasturbinentemperatur T4* abgespeichert, so dass sich insgesamt eine Zuordnung NOx(T4*) in Form eines Kennfeldes für die Gasturbine ergibt. Da der Gasturbinenwert T4* entsprechend der Umgebungstemperatur T0 korrigiert ist, braucht dieser Betriebsparameter nicht weiter berücksichtigt werden, es ergibt sich eine sehr einfache Zuordnung.

Im Betrieb, d.h. wenn die Gasturbine vor Ort in der entsprechenden Anlage eingebaut ist, wird die o.g. Zuordnung NOx(T4*) einmal kalibriert. Hierzu wird der spezifische erste Emissionswert NOx in einem einzigen Betriebspunkt der Gasturbine, gekennzeichnet durch eine bestimmte korrigierte Gasturbinentemperatur T4*, gemessen. Anschließend werden alle Werte im Kennfeld, in dem die Zuordnung NOx(T4*) abgespeichert ist, mit dem Quotienten des im Betrieb gemessenen spezifischen ersten Emissionswertes NOx und dem spezifischen ersten Emissionswert NOx, der sich entsprechend der abgespeicherten Zuordnung ergeben würde, multipliziert. Hierbei und auch während des Betriebes kann ein spezifischer erster Emissionswert für eine korrigierte Gasturbinentemperatur T4*, die zwischen zwei bei dem Probelauf angefahrenen Laststufen liegt, linear interpoliert werden.

Nach dieser Kalibrierung kann im Betrieb der Gasturbine zu beliebigen Zeiten ein zweiter Emissionswert bestimmt werden, der die Menge an Stickoxiden NOx pro Stunde wiedergibt. Hierzu wird aus der abgespeicherten und kalibrierten Zuordnung NOx(T4*) für die im Betrieb aktuell anliegende korrigierte Gasturbinentemperatur T4*, die zu Regelungszwecken ohnehin bestimmt und dem Regler zugeführt wird, ein spezifischer erster Emissionswert NOx [mg/m³_{Norm}] ermittelt. Daneben wird aus dieser Laststufe und der Umgebungstemperatur T0 auch, wie vorstehend erläutert, ein Abgasmassenstrom in [kg/h], bezogen auf 15 % Sauerstoff im trockenen Abgas, bestimmt. Der Abgasvolumenstrom wird mit dem ersten spezifischen Emissionswert NOx [mg/m³_{Norm}] multipliziert und liefert schließlich die Menge an Stickoxiden pro Stunde NOx_15%O2 tr. Abgas als zweiten Emissionswert. Dieser Wert kann beispielsweise periodisch bestimmt und in einem Überwachungsprotokoll abgespeichert werden.

## Patentansprüche

1. Verfahren zur Bestimmung von Emissionswerten einer Gasturbine,
wobei in einem ersten Verfahrensschritt erste Betriebsparameter sowie erste Emissionswerte der Gasturbine direkt bestimmt und einander zugeordnet abgespeichert werden; und
wobei in einem zweiten Verfahrensschritt zweite Betriebsparameter der Gasturbine direkt bestimmt werden und daraus, durch Zuordnung der im zweiten Verfahrensschritt bestimmten Betriebsparametern mit den im ersten Verfahrensschritt einander zugeordneten und abgespeicherten Betriebsparametern sowie Emissionswerten, zweite Emissionswerten indirekt bestimmt werden,
**dadurch gekennzeichnet,**
**dass** der erste Verfahrensschritt während eines Probelaufs vor einer Wieder-, oder Inbetriebnahme der Gasturbine und der zweite Verfahrensschritt während
des Betriebs der Gasturbine erfolgt.

2. Verfahren nach Anspruch 1,
**dadurch gekennzeichnet,**
**dass** der Probelauf beim Hersteller der Gasturbine erfolgt.

3. Verfahren nach einem der vorhergehenden Ansprüche,
**dadurch gekennzeichnet,**
**dass** die Betriebsparameter eine Umgebungstemperatur, eine Gasturbinentemperatur am Eintritt oder Austritt der Gasturbine, eine Laststufe der Gasturbine, eine Drehzahl der Gasturbine, einen Abgasmassenstrom, einen Abgasvolumenstrom,
eine Dichte und/oder einen Druck der der Gasturbine zugeführten Luft und/oder des Abgases der Gasturbine umfassen.

4. Verfahren nach einem der vorhergehenden Ansprüche,
**dadurch gekennzeichnet,**
**dass** die Gasturbinentemperatur entsprechend der Umgebungstemperatur korrigiert, insbesondere um die halbe Umgebungstemperatur vermindert, als ein Betriebsparameter verwendet wird.

5. Verfahren nach einem der vorhergehenden Ansprüchen,
**dadurch gekennzeichnet,**
**dass** während des Betriebs ein Abgasmassenstrom und/oder ein Abgasvolumenstrom aus Betriebsparametern, insbesondere entsprechend eines Kennfeldes. bestimmt und als ein Betriebsparameter verwendet wird.

6. Verfahren nach einem der vorhergehenden Ansprüche,
**dadurch gekennzeichnet,**
**dass** die ersten Emissionswerten spezifische Emissionswerte, normiert auf einen Abgasvolumen- oder Abgasmassenstrom umfassen.

7. Verfahren nach einem der vorhergehenden Ansprüche,
**dadurch gekennzeichnet,**
**dass** während des Probelaufs die ersten Emissionswerte durch Messung,
unter Normbedingungen, Insbesondere eines bestimmten Feuchtegrades des Abgases und/oder eines bestimmten Sauerstoffanteils im Abgas, insbesondere unter Bezug auf einen Sauerstoffgehalt von 15% im trockenen Zustand bestimmt werden.

8. Verfahren nach einem der vorhergehenden Ansprüche,
**dadurch gekennzeichnet,**
**dass** während des Probelaufs verschiedene Laststufen der Gasturbine angefahren werden.

9. Verfahren nach einem der vorhergehenden Ansprüche,
**dadurch gekennzeichnet,**
**dass** vor dem Betrieb die abgespeicherte Zuordnung zwischen den Betriebsparametern und den ersten Emissionswerten wenigstens einmal Kalibriert wird.

10. Vorrichtung für eine Gasturbine, die zur Durchführung eines Verfahrens nach einem der vorhergehenden Ansprüche ausgebildet ist.

11. Vorrichtung nach Anspruch 10, **gekennzeichnet durch** eine Ausgabseinrichtung zur Ausgabe der zweiten Emissionswerte und/oder einer Speichereinrichtung zur Abspeicherung der zweiten Emissionswerte.

## Claims

1. A method for determining emission values of a gas turbine, wherein in a first method step first operating parameters and first emission values of the gas turbine are directly determined and stored assigned to one another; and
wherein in a second method step second operating parameters of the gas turbine are directly determined and from this, by associating the operating parameters determined in the second method step with the operating parameters associated with one another and stored in the first method step as well as emission values, second emission values are indirectly determined,
**characterized**
**in that** the first method step takes place during a trial run before a re-commissioning or commissioning of the gas turbine and the second method step during the operation of the gas turbine.

2. The method according to Claim 1, **characterized in that** the trial run takes place at the manufacturer of the gas turbine.

3. The method according to any one of the preceding claims, **characterized in that** the operating parameters comprise an ambient temperature, a gas turbine temperature at the inlet or outlet of the gas turbine, a load stage of the gas turbine, a rotational speed of the gas turbine, an exhaust gas mass flow rate, an exhaust gas volumetric flow rate, a density and/or a pressure of the air fed to the gas turbine and/or of the exhaust gas of the gas turbine.

4. The method according to any one of the preceding claims, **characterized in that** the gas turbine temperature is used as an operating parameter corrected corresponding to the ambient temperature, in particular reduced by half the ambient temperature.

5. The method according to any one of the preceding claims, **characterized in that** during the operation an exhaust gas mass flow rate and/or an exhaust gas volumetric flow rate of operating parameters, in particular corresponding to a characteristic map, is determined and used as an operating parameter.

6. The method according to any one of the preceding claims, **characterized in that** the first emission values comprise specific emission values, standardized to an exhaust gas volumetric or exhaust gas mass flow rate.

7. The method according to any one of the preceding claims, **characterized in that** during the trial run the first emission values are determined by measurement, under standard conditions, in particular of a certain degree of humidity of the exhaust gas and/or of a certain oxygen content in the exhaust gas, in particular with respect to an oxygen content of 15% in the dry state.

8. The method according to any one of the preceding claims, **characterized in that** during the trial run the gas turbine is operated at various load stages.

9. The method according to any one of the preceding claims, **characterized in that** prior to the operation the stored association between the operating parameters and the first emission values is calibrated at least once.

10. A device for a gas turbine which is designed for carrying out the method according to any one of the preceding claims.

11. The device according to Claim 10, **characterized by** an output device for outputting the second emission values and/or a storage device for storing the second emission values.

## Revendications

1. Procédé de détermination des valeurs d'émission d'une turbine à gaz,
dans lequel dans une première étape de procédé, des premiers paramètres de fonctionnement ainsi que des premières valeurs d'émission de la turbine à gaz sont déterminés directement et mémorisés en étant coordonnés les uns aux autres ; et
dans lequel dans une deuxième étape de procédé, des deuxièmes paramètres de fonctionnement de la turbine à gaz sont déterminés directement et d'après ceux-ci, en coordonnant les paramètres de fonctionnement déterminés dans la deuxième étape de procédé avec les paramètres de fonctionnement mémorisés et coordonnés avec eux dans la première étape de procédé ainsi que les valeurs d'émission, des deuxièmes valeurs d'émission sont déterminées indirectement,
**caractérisé en ce que**
la première étape de procédé a lieu pendant une marche d'essai avant une mise en service ou remise en service de la turbine à gaz et la deuxième étape de procédé a lieu pendant le fonctionnement de la turbine à gaz.

2. Procédé selon la revendication 1, **caractérisé en ce que** la marche d'essai a lieu chez le fabricant de la turbine à gaz.

3. Procédé selon une des revendications précédentes, **caractérisé en ce que** les paramètres de fonctionnement comprennent une température ambiante, une température de turbine à gaz à l'entrée ou à la sortie de la turbine à gaz, un stade de charge de la turbine à gaz, une vitesse de rotation de la turbine à gaz, un débit massique de gaz d'échappement, un débit volumique de gaz d'échappement, une densité et/ou une pression de l'air alimenté dans la turbine à gaz et/ou du gaz d'échappement de la turbine à gaz.

4. Procédé selon une des revendications précédentes, **caractérisé en ce que** la température de turbine à gaz est corrigée de manière correspondante à la température ambiante, notamment diminuée de la moitié de la température ambiante et est utilisée comme un paramètre de fonctionnement.

5. Procédé selon une des revendications précédentes, **caractérisé en ce que** pendant le fonctionnement un débit massique de gaz d'échappement et/ou un débit volumique de gaz d'échappement est déterminé d'après les paramètres de fonctionnement, notamment de manière correspondante à un champ caractéristique et est utilisé comme un paramètre de fonctionnement.

6. Procédé selon une des revendications précédentes, **caractérisé en ce que** les premières valeurs d'émission comprennent des valeurs d'émission typiques, normalisées sur un débit massique ou un débit volumique de gaz d'échappement.

7. Procédé selon une des revendications précédentes, **caractérisé en ce que** pendant la marche d'essai des premières valeurs d'émission sont déterminées par mesure, dans des conditions normales, notamment d'un degré d'humidité déterminé du gaz d'échappement et/ou d'une fraction d'oxygène déterminée dans le gaz d'échappement, notamment en se référant à une teneur en oxygène de 15 % en l'état sec.

8. Procédé selon une des revendications précédentes, **caractérisé en ce que** pendant la marche d'essai, différents stades de charge de la turbine à gaz sont amorcés.

9. Procédé selon une des revendications précédentes, **caractérisé en ce que**, avant le fonctionnement, la coordination mémorisée entre les paramètres de fonctionnement et les premières valeurs d'émission est calibrée au moins une fois.

10. Dispositif pour une turbine à gaz, qui est conçu afin de mettre en oeuvre un procédé selon une des revendications précédentes.

11. Dispositif selon la revendication 10, **caractérisé par** un dispositif d'émission pour émettre les deuxièmes valeurs d'émission et/ou un dispositif de mémorisation pour mémoriser les deuxièmes valeurs d'émission.
